# EUROPÄISCHE PATENTSCHRIFT

(11) **EP 0 835 800 B1**
(45) Veröffentlichungstag und Bekanntmachung des Hinweises auf die Patenterteilung: **26.01.2000**
(21) Anmeldenummer: 97114721.0
(22) Anmeldetag: 26.08.1997
(51) Int. Cl.: B62D 33/02, B61D 39/00

(54) **Rungenlaufwagen für Fahrzeugaufbauten**
Stanchion-carrying trolley for vehicle structures
Chariot pour supporter l'étançon de la structure d'un véhicule

(30) Priorität: 10.10.1996 DE 29617631 U
(43) Veröffentlichungstag der Anmeldung: 15.04.1998
(73) Patentinhaber: Edscha LKW-Schiebeverdecke GmbH, 94491 Hengersberg (DE)
(72) Erfinder: Fliege, Dieter, 42855 Remscheid (DE)
(74) Vertreter: Sparing, Rolf Klaus, Dipl.-Wirtsch.-Ing.

(56) Entgegenhaltungen:
- DE-U- 9 312 295
- DE-U- 29 617 631
- FR-A- 2 494 203
- US-A- 2 757 759
- US-A- 3 999 630
- US-A- 4 208 970

## Beschreibung

Die Erfindung bezieht sich auf einen Rungenlaufwagen für Fahrzeugaufbauten, insbesondere Verdecke für Nutzfahrzeuge, deren Verdeckgestell zwei entlang der oberen Längskanten des Aufbaues angeordnete und sich mit einem Abstand zu dieser über die Länge der Ladepritsche hin erstreckende obere Längsgurte umfaßt, die ihrerseits durch aufragende und an dieser gehalterte Pfosten und Rungen gegen die Ladepritsche abgestützt sind, wobei wenigstens eine der Rungen einerseits mittels einer Befestigungseinrichtung an der Ladepritsche festlegbar und andererseits vermittels wenigstens eines Laufrollenpaares in Längsrichtung verschiebbar an den oberen Längsgurt angeschlossen ist und wobei der Längsgurt mit einer sich in seiner Längsrichtung erstreckenden Führungsschiene versehen ist, in welcher der den Rungenlaufwagen bildende, mit der verschiebbaren Runge verbundene und zwei an einem Chassis angeordnete Laufrollenpaare aufweisende Rollenwagen verfahrbar aufgenommen und geführt ist. Ein Derartiger Rungenlaufwagen gemäß dem Oberbegriff des Anspruchs 1 ist beispielweise aus dem Dokument DE-GM-9 312 295 bekannt.

Derartige Fahrzeugaufbauten für Nutzfahrzeuge, insbesondere Lastkraftwagen oder Anhänger, die zwei entlang der oberen Aufbaukanten angeordnete und sich mit einem Abstand zu dieser über die Länge der Ladepritsche hin erstreckende Längsgurte umfaßen, die ihrerseits durch aufragende und an dieser gehalterte Pfosten an der Ladepritsche abgestützt sind, werden vielfach und hauptsächlich, wenn auch nicht ausschließlich bei solchen Nutzfahrzeugen, deren Ladefläche von einem Planentraggestell übergriffen ist, verwendet. Von Nachteil ist bei solchen Fahrzeugaufbauten für Nutzfahrzeuge deren Fahrzeugaufbauten nicht nur an den beiden Enden der Ladepritsche über aufragende Pfosten sondern auch zwischen diesen über Rungen abgestützte Längsgurte aufweisen jedoch, daß bei der Beladungung des Laderaumes bzw. der Ladefläche oder Ladepritsche des Nutzfahrzeuges die im Bereich der Seitenlängen der Ladefläche angeordneten Rungen störend im Wege stehen. Es ist daher bereits vorgeschlagen worden, beispielseweise durch das DE-GM 93 12 295 oder die FR-PS 2 494 203, die zwischen den beiden Enden der Ladefläche angeordneten Rungen einerseits lösbar mit der Ladepritsche zu verbinden und andererseits an diesen längsverschiebbar an den Längsgurten des Fahrzeugaufbaues aufzuhängen um erforderlichenfalls die seitliche Zugänglichkeit der Ladefläche verbessern bzw. eine einer Beladung störend im Wege stehende Runge vorübergehend verschieben zu können. Durch die Verschiebarkeit der Runge in Ladeflächenlängsrichtung ist es zwar möglich, je nach dem, welche Stelle am Laderaum beschickt werden soll, den Pfosten zur Seite zu schieben, so daß die Runge nicht mehr störend im Beschickungsweg stehen kann. Die bei bisher bekannt gewordenen Bauarten von Fahrzeugaufbauten für Nutzfahrzeuge, für die längsverschiebliche, längsgurtseitige Aufhängung der Rungen verwendeten und zu Rollenwagen zusammengefaßten Rollenanordnungen, DE-GM 93 12 295 und FR-PS 2 494 203, ermöglichen zwar eine verschieben der Rungen in Fahrzeuglängsrichtung, zeichnen sich aber insbesondere dadurch aus, daß dem Festsetzen der Runge in einer ausgewählten Stellung eine seitlich neben der den Rollenwagen aufnehmenden Führungsschiene befindliche Stützfläche vorgesehen sein muß, gegen welche die Runge unter gleichzeitiger vertikaler Anhebung des Rollenwagens festgespannt werden kann. Dies erfordert zum einen eine verhältnismäßig breite und daher unerwünschte Ausführung der oderen Längesgurte des Fahrzeugaufbaues und bringt zum anderen eine verhältnismäßig umständliche und nur mit einem berträchtlichen Kraftaufwand auszuführende Handhabung der Rungen mit sich.
Auch die sonstigen bekannten und gebräuchlichen Verbindungen beweglicher Rungen mit den Längsgurten von Fahrzeugaufbauten zeichnen sich zum einen durch eine verhältnismäßig komplizierten und daher teueren Aufbau aus und sind auf der anderen Seite nicht in der Lage eine sichere Festlegung der Rungen an den oberen Längsgurten des Fahzeugauf-baues in einer ausgewählten Stellung zu gewährleisten, so daß zusätzlich besondere und meist umständlich handzuhabende Einrichtungen zur Festlegung der Rungen an den oberen Längsgurten erforderlich waren.

Aufgabe der vorliegenden Erfindung ist es daher, einen Rungenlaufwagen für Fahrzeugaufbauten, insbesondere Verdecke für Nutzfahrzeuge, der eingangs bezeichneten Bauart zu schaffen, der auf der bei einfacher Ausbildung und Herstellbarkeit einerseits leichtgängig in Längsgurtlängsrichtung verschiebbar und andererseits schnell und einfach in einer den Anforderungen hinsichtlich Stabilität und Lagengenauigkeit gerecht werdenden Weise am Längsgurt festlegbar ist. Zur Lösung dieser Aufgabe dienen die kennzeichnenden Merkmale des Anspruchs 1.

Diese Aufgabe wird bei einen Rungenlaufwagen für Fahrzeugaufbauten, insbesondere Verdecke für Nutzfahrzeuge, der eingangs bezeichneten Bauart erfindungsgemäß im Wesentlichen dadurch gelöst, daß der zwei Laufrollenpaare aufweisende Rollenwagen gegen den Längsgurt selbst festklemmbar ist, wobei wenigstens ein Teil des Chassis des Rollenwagens vermittels eines Schwenkhebelparallelogrammes mit den Laufrollenpaaren verbunden und der Rollenwagen zudem mit einer Festklemmeinrichtung ausgestattet ist. Der Einsatz eines Rungenlaufwagens verleiht einerseits in an sich bekannter Weise der Verbindung einer beweglichen Runge mit dem Längsgurt des Fahrzeugaufbaues eine hinreichende Stabilität und gewährleistet andererseits zugleich eine leichgängige Verstellbarkeit der Runge in Längsgurt-bzw. Ladeflächenlängsrichtung. Zugleich wird aber durch die Zuordnung einer Festklemmeinrichtung zum Chassis des Rungenlaufwagens auch eine einfach herstellbare und gleichmaßen einfach handhabbare Einrichtung zum sicheren Festlegen der Runge in einer ausgewählten Stellung gegenüber dem oberen Längsgurt des Fahrzeugaufbaues geschaffen.

In einer bevorzugten Verwirklichung der Erfindung ist dabei vorgesehen, daß der vermittels eines Schwenkhebelparallelogrammes mit den Laufrollen verbundene Teil des Chassis des Rollenwagens an seiner dem oberen Längsgurt zugewandten Seite mit einem Bremsbelag ausgestattet ist, wobei der vermittels eines Schwenkhebelparallelogrammes mit den Laufrollen verbundene Teil des Chassis des Rollenwangens mit einer Festklemmeinrichtung ausgestattet ist.

Gemäß einer bevorzugten Gestaltungsform der Festklemmeinrichtung kann dabei weiter vorgesehen sein, daß die Festklemmeinrichtung einen in die den Laufrollen zugeordneten Führungsschiene des Längsgurtes eingreifenden Widerlagerkörper und eine am Chassis des Rollenwagens angeordnete Spanneinrichtung umfaßt, wobei der Widerlagerkörper vermittels eines Schwenkhebels mit einem manuell betätigbaren Spannelement der Spanneinrichtung zusammenwirkt.
Im Rahmen einer solchen Ausgestaltungsform kann dann im Einzelnen weiter noch vorgeshen sein, daß die Spanneinrichtung durch einen am Rollenwagenchassis um eine zu den Anlenkachsen der Schwenkhebel des Schwenkhebelparallelogrammes parallele Achse schwenkbar angelenkten Spannriegel gebildet ist, insbesondere dahingehend, daß der an den Widerlagerkörper angeschlossene Schwenkhebel an seinem freien Ende mit einer Rolle ausgestattet ist und der am Rollenwagenchassis schwenkbar gelagerte Spannriegel, die Rolle hintergreifend hakenförmig gekrümmt ist.

In einer zweckmäßigen Einzelausgestaltung kann zur verbesserung der handhabbarkeit der Festklemmeinrichtung ferner noch vorgesehen sein, daß der Spannriegel mit einem Handgriff zur manuellen Betätigung versehen ist, wobei sich eine besonders einfach praktikable Ausführungsform daraus ergibt, daß die den Spannriegel am Rollenwagenchassis lagernde Achse das Rollenwagenchassis durchsetzt und der an den Spannriegel angeschlossene Handgriff dem Rollenwagenchassis gegenüber außenliegend angeordnet ist.

Schließlich wird noch ein Merkmal der Erfindung darin gesehen, daß das Rollenwagenchassis eine im Wesentlichen L-förmige Querschnittsform aufweist und an der der Führungsschiene des oberen Längsgurtes zugewandten Oberseite seines im wesentlichen horizontal ausgerichteten, kürzeren Schenkels mit einem Bremsbelag ausgestattet ist, während er über den im wesentlichen vertikal gerichteten längeren Schenkel seiner Porfilquerschnittsform mit der Runge verbunden ist.

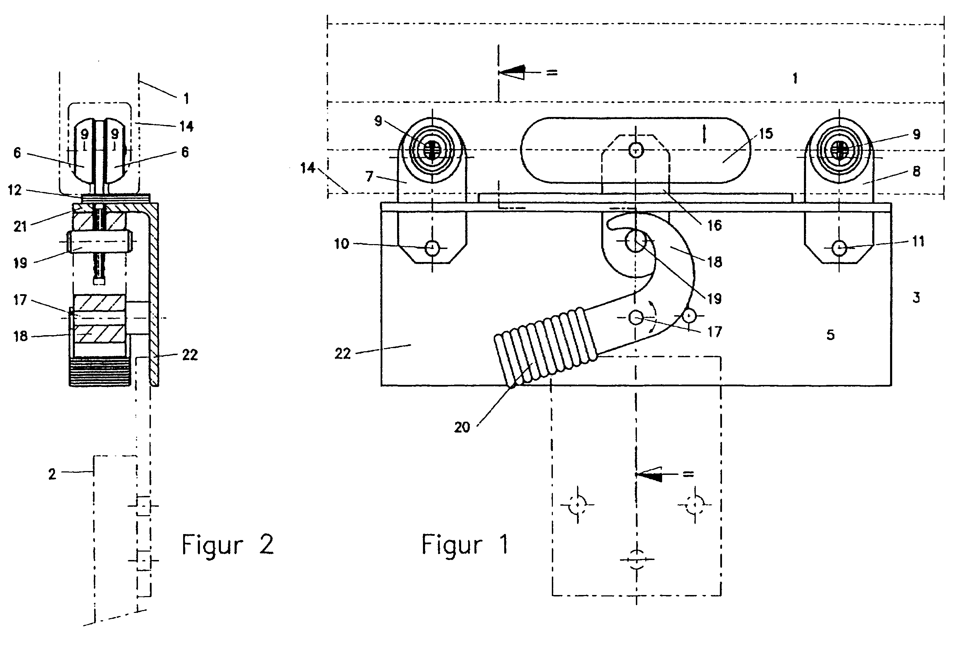

Die Erfindung ist in der nachfolgenden Beispielsbeschreibung anhand eines in der Zeichnung dargestellten Ausführungsbeispieles im Einzelnen beschrieben.
In der Zeichnung zeigt die
- Figur 1: eine Seitenansicht eines Rungenlaufwagens;
- Figur 2: einen Schnitt durch den rungenlaufwagen nach Figur 1 entlang der Linie II-II.

Ein in der Zeichnung in seiner Gesamtheit nicht dargestellter Fahrzeugaufbau besteht im Wesentlichen aus einem aus zwei im Abstand zu dieser verlaufenden, die Länge der Ladefläche überspannenden und endseitig jeweils vermittels feststehend angeordneter, aufragender Eckpfosten gegen die Ladefläche abgestützten oberen Längsgurtn und diese am vorderen bzw. hinteren Ladeflächenende untereinander verbindenden Querträgern. Im Bereich zwischen den Eckpfosten sind Rungen 2 angeordnet, unterendig lösbar an der Ladefläche befestigbar und oberendig vermittels Rungenlaufwagen 3 an an diesen ausgebildeter Führungen 4 längsberschiebbar an die Längsgurte 1 angeschlossen sind. Die Rungenlaufwagen 3 sind als Rollenwagen ausgebildet. Das Chassis 5 jedes Rollenwagens 3 ist mit zwei Laufrollenpaaren 6 und einer Festklemmeinrichtung ausgestattet. Mit den Laufrollenpaaren 6 ist das Chassis 5 des Rollenwagens 3 vermittels eines Schwenkhebelparallelogrammes 7,8 verbunden, wobei die beiden Schwenkhebel 7 und 8 des Schwenkhebelparallelogrammes um zu den Laufrollenachsen 9 parallele Achsen 10 und 11 schwenkbar an das Chassis 5 des Rollenwagens 3 angeschlosen sind. Das vermittels des Schwenkhebelparallelogrammes 7,8 mit den Laufrollen 6 verbundene Chassis 5 des Rollenwagens 3 ist an seiner dem oberen Längsgurt zugewandten Seite mit einem Bremsbelag 12 ausgestattet. Eine dem Chassis 5 des Rollenwagens 3 zugeordnete Festklemmeinrichtung umfaßt einen in die den Laufrollen 6 zugeordnete Führungsschiene 14 des Längsgurtes 1 eingreifenden Widerlagerkörper 15 und eine am Chassis 5 des Rollenwagens 3 angeordnete Spanneinrichtung wobei der Widerlagerkörper 15 vermittels eines Schwenkhebels 16 mit einem manuell betätigbaren Spannelement der Spanneinrichtung zusammenwirkt. Die Spanneinrichtung ist durch einen am Rollenwagenchassis 5 um eine zu den Anlenkachsen 10 und 11 der Schwenkhebel 7 und 8 des Schwenkhebelparallelogrammes parallele Achse 17 schwenkbar angelenkten Spannriegel 18 gebildet. Der an den Widerlagerkörper 15 angeschlossene Schwenkhebel 16 ist an seinem freien Ende mit einer Rolle 19 ausgestattet und der am Rollenwagenchassis 5 schwenkbar gelagerte Spannriegel 18 ist, die Rolle hintergreifend, hakenförmig gekrümmt. Der Spannriegel 18 ist mit einem Handgriff 20 zur manuellen Betätigung versehen. Die den Spannriegel 18 am Rollenwagenchassis 5 lagernde Achse 17 durchsetzt das Rollenwagenchassis 3, so daß der an den Spannriegel 18 angeschlossene Handgriff 20 dem Rollenwagenchassis 3 gegenüber außenliegend angeordnet ist. Insgesamt ist das im Ausführungsbeispiel gezeigte Rollenwagenchassis 3 durch einen abgewinkelten Flachmaterialzuschnitt gebildet und weist eine im Wesentlichen L-förmige Querschnittsform auf. An der der Führungsschiene 14 des oberen Längsgurtes 1 zugewandten Oberseite seines im wesentlichen horizontal ausgerichteten, kürzeren Schenkels 21 ist das Rollenwagenchassis 3 mit einem Bremsbelag ausgestattet. Über den im wesentlichen vertikal gerichteten längeren Schenkel 22 seiner Porfilquerschnittsform ist der Rollenwagen 3 mit der Runge 2 verbunden.

## Patentansprüche

1. Rungenlaufwagen für Fahrzeugaufbauten, insbesondere Verdecke für Nutzfahrzeuge, deren Verdeckgestell zwei entlang der oberen Längskanten des Aufbaues angeordnete und sich mit einem Abstand zu dieser über die Länge der Ladepritsche hin erstreckende obere Längsgurte (1) umfaßt, die ihrerseits durch aufragende und an dieser gehalterte Pfosten und Rungen (2) gegen die Ladepritsche abgestützt sind, wobei wenigstens eine der Rungen (2) einerseits mittels einer Befestigungseinrichtung an der Ladepritsche festlegbar und andererseits vermittels wenigstens eines Laufrollenpaares (6) in Längsrichtung verschiebbar an den oberen Längsgurt (1) angeschlossen ist, wobei der Längsgurt (1) mit einer sich in seiner Längsrichtung erstreckenden Führungsschiene (14) versehen ist, in welcher der den Rungenlaufwagen (3) bildende, mit der verschiebbaren Runge (2) verbundene und zwei an einem Chassis (5) angeordnete Laufrollenpaare (6) aufweisende Rollenwagen verfahrbar aufgenommen und geführt ist,
dadurch gekennzeichnet,
daß der zwei Laufrollenpaare (6) aufweisende Rollenwagen (3) gegen den Längsgurt (1) selbst festklemmbar ist, wobei wenigstens ein Teil des Chassis (5) des Rollenwagens (3) vermittels eines Schwenkhebelparallelogrammes (7, 8) mit den Laufrollenpaaren (6) verbunden und der Rollenwagen (3) zudem mit einer Festklemmeinrichtung ausgestattet ist.

2. Rungenlaufwagen nach Anspruch 1, dadurch gekennzeichnet, daß der vermittels eines Schwenkhebelparallelogrammes (7, 8) mit den Laufrollen (6) verbundene Teil des Chassis (5) des Rollenwagens (3) an seiner dem oberen Längsgurt (1) zugewandten Seite mit einem Bremsbelag (12) ausgestattet ist.

3. Rungenlaufwagen nach Anspruch 1 oder 2, dadurch gekennzeichnet, daß das Chassis (5) eine im wesentlichen L-förmige Querschnittsform aufweist und an der der Führungsschiene (14) des oberen Längsgurtes (1) zugewandten Oberseite seines im wesentlichen horizontal ausgerichteten, kürzeren Schenkels (21) mit einem Bremsbelag ausgestattet ist, während er über den im wesentlichen vertikal gerichteten längeren Schenkel (22) seiner Profilquerschnittsform mit der Runge (2) verbunden ist.

4. Rungenlaufwagen nach einem der Ansprüche 1 bis 3, dadurch gekennzeichnet, daß die Festklemmeinrichtung einen in die den Laufrollen (6) zugeordneten Führungsschiene (14) des Längsgurtes (1) eingreifenden Widerlagerkörper (15) und eine am Chassis (5) des Rollenwagens (3) angeordnete Spanneinrichtung umfaßt, wobei der Widerlagerkörper (15) vermittels eines Schwenkhebels (16) mit einem manuell betätigbaren Spannelement (18) der Spanneinrichtung zusammenwirkt.

5. Rungenlaufwagen nach Anspruch 4, dadurch gekennzeichnet, daß die Spanneinrichtung durch einen am Chassis (5) um eine zu den Anlenkachsen (10, 11) der Schwenkhebel (7, 8) des Schwenkhebelparallelogrammes (7, 8) parallele Achse (17) schwenkbar angelenkten Spannriegel (18) gebildet ist.

6. Rungenlaufwagen nach Anspruch 5, dadurch gekennzeichnet, daß der an den Widerlagerkörper (15) angeschlossene Schwenkhebel (16) an seinem freien Ende mit einer Rolle (19) ausgestattet ist und der am Chassis (5) schwenkbar gelagerte Spannriegel (18) die Rolle (19) hintergreifend hakenförmig gekrümmt ist.

7. Rungenlaufwagen nach Anspruch 5 oder 6, dadurch gekennzeichnet, daß der Spannriegel (18) mit einem Handgriff (20) zur manuellen Betätigung versehen ist.

8. Rungenlaufwagen nach Anspruch 7, dadurch gekennzeichnet, daß die den Spannriegel (18) am Chassis (5) lagernde Achse (17) das Rollenwagenchassis (5) durchsetzt und der an den Spannriegel (18) angeschlossene Handgriff (20) dem Rollenwagenchassis (5) gegenüber außenliegend angeordnet ist.

## Claims

1. Stake-carrying carriage for vehicle bodies, in particular covers for commercial vehicles, of which the cover framework comprises two upper longitudinal belts (1) which are arranged along the upper longitudinal edges of the body, extend at a distance from it over the length of the loading platform and, in turn, are supported against the loading platform by vertical posts and stakes (2) mounted thereon, wherein at least one of the stakes (2) is, on the one hand, fixable on the loading platform by means of a fastener and, on the other hand, attached longitudinally displaceably on the upper longitudinal belt (1) by means of at least one pair of castors (6), wherein the longitudinal belt (1) is provided with a guide rail (14) which extends in its longitudinal direction and in which the rolling carriage forming the stake-carrying carriage (3), connected to the displaceable stake (2) and comprising two pairs of castors (6) arranged on a chassis (5) is movably accommodated and guided, characterised in that the rolling carriage (3) comprising two pairs of castors (6) can be clamped against the longitudinal belt (1) itself, wherein at least a portion of the chassis (5) of the rolling carriage (3) is connected to the pairs of castors (6) by means of a pivoting lever parallelogram (7, 8) and the rolling carriage (3) is also equipped with a clamping device.

2. Stake-carrying carriage according to claim 1, characterised in that the portion of the chassis (5) of the rolling carriage (3) connected to the castors (6) by means of a pivoting lever parallelogram (7, 8) is equipped with a brake lining (12) on its side facing the upper longitudinal belt (1).

3. Stake-carrying carriage according to claim 1 or 2, characterised in that the chassis (5) has a substantially L-shaped cross-sectional shape and is equipped with a brake lining on the upper side, facing the guide rail (14) of the upper longitudinal belt (1), of its substantially horizontally orientated shorter arm (21), whereas it is connected to the stake (2) via the substantially vertically orientated longer arm (22) of its profile cross-section.

4. Stake-carrying carriage according to one of claims 1 to 3, characterised in that the clamping device comprises an abutment (15) engaging in the guide rail (14) of the longitudinal belt (1) associated with the castors (6) and a fastening device arranged on the chassis (5) of the rolling carriage (3), wherein the abutment (15) cooperates by means of a pivoting lever (16) with a manually actuable fastening element (18) of the fastening device.

5. Stake-carrying carriage according to claim 4, characterised in that the fastening device is formed by a fastening bolt (18) articulated to the chassis (5) pivotally round an axis (17) parallel to the articulating axes (10, 11) of the pivoting lever (7, 8) of the pivoting lever parallelogram (7, 8).

6. Stake-carrying carriage according to claim 5, characterised in that the pivoting lever (16) attached to the abutment (15) is equipped with a roller (19) at its free end and the fastening bolt (18) pivotally mounted on the chassis (5) is bent so as to engage behind the roller (19) in the manner of a hook.

7. Stake-carrying carriage according to claim 5 or 6, characterised in that the fastening bolt (18) is provided with a handle (20) for manual actuation.

8. Stake-carrying carriage according to claim 7, characterised in that the axis (17) mounting the fastening bolt (18) on the chassis (5) passes through the rolling carriage chassis (5) and the handle (20) attached to the fastening bolt (18) is arranged externally opposite the rolling carriage chassis (5).

## Revendications

1. Chariot de ranchers pour structures de véhicules automobiles, en particulier pour capotes de véhicules utilitaires, dont le bâti comporte deux longerons (1) supérieurs qui sont disposés le long des bords supérieurs de la structure, qui s'étendent sur toute la longueur de la plate-forme de chargement à une certaine distance au-dessus de celle-ci et qui s'appuient sur la plate-forme de chargement par l'intermédiaire de ranchers (2) et de montants d'angle fixés et se dressant sur la plate-forme de chargement, étant précisé qu'au moins l'un des ranchers (2) peut être fixé sur la plate-forme de chargement par un dispositif de fixation et est assemblé avec le longeron supérieur (1) en étant déplaçable longitudinalement grâce à au moins une paire de galets (6) et que le longeron (1) est pourvu d'un rail de guidage (14) s'étendant longitudinalement, dans lequel est déplaçable et guidé le chariot roulant constituant le chariot de ranchers (3) et équipé de deux paires de galets (6) montées sur son châssis (5) **caractérisé en ce que** le chariot roulant (3) qui comporte deux paires de galets (6) peut être bloqué lui-même par rapport au longeron (1), **en ce que** au moins une partie du châssis (5) de chariot roulant (3) est assemblée avec les paires de galets (6) par l'intermédiaire de leviers pivotants (7), (8) formant un parallélogramme articulé et **en ce que** le chariot roulant (3) est de plus équipé d'un dispositif de blocage.

2. Chariot de ranchers selon la revendication 1 **caractérisé en ce que** la partie du châssis (5) de chariot roulant, qui est assemblée avec les galets (6) par des leviers pivotants (7), (8) formant un parallélogramme articulé, est pourvue sur sa face orientée vers le longeron (1) d'une garniture de frein (12).

3. Chariot de ranchers selon les revendications 1 ou 2 **caractérisé en ce que** le châssis (5) présente une section transversale sensiblement en forme de L et **en ce que** sa branche (21) la plus courte, sensiblement horizontale, est pourvue sur sa face orientée vers le rail de guidage (14) du longeron supérieur (1) d'une garniture de frein tandis que sa branche (22) la plus longue, sensiblement verticale, est assemblée avec le rancher (2).

4. Chariot de ranchers selon l'une des revendications 1 et 2 **caractérisé en ce que** le dispositif de blocage comporte, d'une part, une contre-butée (15) engagée dans le rail de guidage (14) du longeron (1) qui coopère avec les galets (6) et, d'autre part, un dispositif de serrage agencé sur le châssis (5) de chariot roulant (3), la contre-butée (15) coopérant par l'intermédiaire d'un levier pivotant (16) avec un élément de serrage (18) du dispositif de serrage, actionné manuellement.

5. Chariot de ranchers selon la revendication 4 **caractérisé en ce que** le dispositif de serrage est constitué d'un levier de verrouillage (18) articulé sur le châssis (5) autour d'un axe (17) parallèle aux axes d'articulation (10), (11) des leviers pivotants (7), (8) formant un parallélogramme articulé.

6. Chariot de ranchers selon la revendication 5 **caractérisé en ce que** l'extrémité libre du levier pivotant (16) assemblé avec la contre-butée (15) est pourvue d'un rouleau (19) et **en ce que** le levier de verrouillage (18) articulé sur le châssis (5) présente une forme de crochet s'engageant derrière le rouleau (19).

7. Chariot de ranchers selon les revendications 5 ou 6 **caractérisé en ce que** le levier de verrouillage (18) est pourvu d'une poignée (20) en vue de son actionnement manuel.

8. Chariot de ranchers selon la revendication 7 **caractérisé en ce que** l'axe (17) assurant l'articulation du levier de verrouillage (18) sur le châssis (5) traverse ce dernier et **en ce que** la poignée (20) assemblée avec ledit levier de verrouillage (18) est disposée à l'extérieur par rapport au châssis (5) de chariot roulant.
